# EUROPÄISCHE PATENTSCHRIFT

(11) **EP 3 113 275 B1**
(45) Veröffentlichungstag und Bekanntmachung des Hinweises auf die Patenterteilung: **09.06.2021**
(21) Anmeldenummer: 15174388.7
(22) Anmeldetag: 29.06.2015
(51) Int. Cl.: H01M 10/0568, H01M 10/0569, H01M 10/054, H01M 4/133, H01M 4/587

(54) **SEKUNDÄRE MAGNESIUMBATTERIE UND ELEKTROLYTSYSTEM SOWIE ELEKTRODE FÜR EINE SEKUNDÄRE MAGNESIUMBATTERIE**
SECONDARY MAGNESIUM BATTERY AND ELECTROLYTE SYSTEM AND ELECTRODE FOR A SECONDARY MAGNESIUM BATTERY
BATTERIE SECONDAIRE AU MAGNESIUM ET SYSTEME D'ELECTROLYTE ET ELECTRODE POUR UNE BATTERIE SECONDAIRE AU MAGNESIUM

(43) Veröffentlichungstag der Anmeldung: 04.01.2017
(73) Patentinhaber: VARTA Micro Innovation GmbH, 8010 Graz (AT); Technische Universität Graz, 8010 Graz (AT)
(72) Erfinder: God, Dr. Colin, 8010 Graz (AT); Handel, Patricia, 8045 Graz (AT); Zoidl, Manuel, 8010 Graz (AT); Wrodnigg, Tanja, 8010 Graz (AT)
(74) Vertreter: Patentanwaltskanzlei Cartagena

(56) Entgegenhaltungen:
- WO-A1-2010/023413
- WO-A1-2015/049435
- CN-A- 104 447 564
- US-A1- 2002 102 380
- US-A1- 2012 219 867

## Beschreibung

Die Erfindung betrifft eine sekundäre Magnesiumbatterie und ein Elektrolytsystem für eine sekundäre Magnesiumbatterie.

Der Begriff "Batterie" meinte ursprünglich mehrere in Serie geschaltete elektrochemische Zellen. Heute werden auch einzelne elektrochemische Zellen häufig als Batterie bezeichnet. Bei der Entladung einer elektrochemischen Zelle findet eine energieliefernde chemische Reaktion statt, welche sich aus zwei elektrisch miteinander gekoppelten, aber räumlich voneinander getrennten Teilreaktionen zusammensetzt. Eine bei vergleichsweise niedrigerem Redoxpotenzial stattfindende Teilreaktion läuft an der negativen Elektrode ab, eine bei vergleichsweise höherem Redoxpotenzial an der positiven Elektrode. Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionenleitenden Elektrolyten gewährleistet. In sekundären (wieder aufladbaren) Zellen und Batterien ist diese Entladereaktion reversibel, es besteht also die Möglichkeit, die bei der Entladung erfolgte Umwandlung chemischer Energie in elektrische umzukehren. Werden in diesem Zusammenhang die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Unter den sekundären Zellen und Batterien werden vergleichsweise hohe Energiedichten von Zellen und Batterien auf Basis von Lithiumionen erreicht. Bei Batterien auf Basis von Lithiumionen ist allerdings problematisch, dass sie aufgrund der hohen Reaktivität von Lithium und damit gegebenenfalls einhergehenden unerwünschten Reaktionen mit dem Elektrolyten ein Sicherheitsrisiko darstellen können. Weiterhin ist Lithium ein relativ teures Element. Insbesondere vor dem Hintergrund einer zunehmenden Elektromobilisierung und der damit verbundenen Nachfrage nach großen und leistungsstarken Lithiumbatterien, rücken diese Sicherheits- und Kostenfaktoren stärker in den Vordergrund.

Daher wurde in letzter Zeit zunehmend versucht, eine Alternative zu Lithium zu finden. Eine mögliche Alternative ist der Einsatz von Magnesium in sekundären Zellen und Batterien. Magnesium ist weniger reaktiv und tendiert zudem im Gegensatz zu Lithium weniger stark zur Dendritenbildung. Ein interner Kurzschluss einer Batterie in Folge von Dendritenbildung ist daher weitgehend ausgeschlossen. Im Übrigen ist Magnesium Im Vergleich zu Lithium in einem um etwa den Faktor 100 größeren Anteil in der Erdkruste vorhanden, was sich in einem niedrigeren Preis äußert. Ferner lassen sich mit Magnesiumionen theoretisch höhere Energiedichten erzielen, da durch das zweiwertige Magnesiumion die doppelte Ladung pro Ion übertragen werden kann.

Bekannt sind Magnesiumbatterien, bei denen Magnesiumionen aus einer metallischen Magnesiumanode über einen Elektrolyten in ein Kathodenmaterial, beispielsweise Vanadiumoxid (V₂O₅), eingelagert werden (Entladereaktion). Beim Aufladen werden die Magnesiumionen aus der Kathode ausgelagert und an der Anode in Form von metallischem Magnesium wieder abgeschieden. Bei Vorgängen wie diesem ist entscheidend, dass sowohl die reversible elektrochemische Abscheidung und Auflösung des Magnesiums an der Anode als auch die reversible Ein- und Auslagerung der Magnesiumionen in das Kathodenmaterial gewährleistet ist. Diese Vorgänge müssen vom Elektrolyten unterstützt werden.

Die reversible elektrochemische Abscheidung und Auflösung von Magnesium an der Anode ist mit organischen Elektrolyten, wie sie beispielsweise in herkömmlichen Lithiumbatterien verwendet werden, nicht möglich, da diese aufgrund ihrer Reaktivität eine Passivierung der metallischen Magnesiumanode bewirken würden. Es besteht generell ein Bedarf an Elektrolyten, die speziell auf die Anforderungen in sekundären Magnesiumbatterien abgestellt sind.

In der CN 104447564 A findet ein Salz basierend auf 4,5-Dicyano-2-Trifluoromethyl-lmidazol im Zusammenhang mit Batterien auf Basis von Lithiumionen Erwähnung.

Aus der US 2012/219667 A1 ist eine sekundäre Magnesiumbatterie bekannt. Diese weist einen Elektrolyten auf, dessen Magnesium-Leitsalz einen stickstoffhaltigen Heterozyklus, beispielsweise ein Imidazolat-lon, umfasst.

In der WO 2015/049435 A1 ist eine Lithiumbatterie beschrieben, deren Elektrolyt Magnesiumionen als Verunreinigungen im ppm-Bereich enthalten kann.

Der vorliegenden Erfindung lag die Aufgabe zugrunde, verbesserte Magnesiumbatterien bereitzustellen. In diesem Zusammenhang sollte ein Elektrolytsystem entwickelt werden, das speziell auf die Anforderungen in sekundären Magnesiumbatterien abgestimmt ist.

Diese Aufgabe wird gelöst durch die Magnesiumbatterie mit den Merkmalen des Anspruchs 1 und das Elektrolytsystem mit den Merkmalen des Anspruch 12. Bevorzugte Ausführungsformen der erfindungsgemäßen Magnesiumbatterie sind in den abhängigen Ansprüchen 2 bis 11 angegeben. Eine bevorzugte Ausführungsform des erfindungsgemäßen Elektrolytsystems ist im abhängigen Anspruch 13 angegeben.

Die erfindungsgemäße Magnesiumbatterie umfasst mindestens eine positive Elektrode, die ein Aktivmaterial enthält, das Magnesiumionen reversibel ein- und auszulagern vermag und sie umfasst mindestens eine negative Elektrode, die ein Aktivmaterial enthält, das Magnesiumionen reversibel ein- und auszulagern vermag und sie umfasst ein Elektrolytsystem aus einem Lösungsmittel und einem darin zumindest teilweise gelösten Magnesiumsalz, über das ein Ladungsaustausch zwischen der mindestens einen positiven und der mindestens einen negativen Elektrode stattfinden kann. Das Magnesiumsalz weist ein Imidazolat-Anion der Formel I 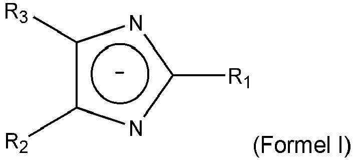 auf. In dieser Formel ist R₁
- ein Rest aus der Gruppe mit Alkyl-, Aryl-, Alkyl-Aryl-, Aryl-Alkyl-, Alkyl-O-, Aryl-O-, Alkyl-O-Alkyl-, Aryl-O-Aryl-, Alkyl-O-Aryl- und Aryl-O-Alkyl- mit Alkyl = -CH₂-, -CH₃, -(CH₂)₂-, -C₂H₅,-(CH₂)₃-, -C₃H₇, -(CH₂)₄-, -C₄H₉, -(CH₂)₅-, -C₅H₁₁, -(CH₂)₆-, -C₆H₁₃ oder Cycloalkyl- oder
- ein Oligo- oder Polyether-Rest aus der Gruppe mit Alkyl-[O-Alkyl]ₙ-, Alkyl-[O-Alkyl]ₙ-O-, Aryl-[O-Aryl]ₙ,-, Aryl-[O-Aryl]n-O-, Alkyl-[O-Aryl]ₙ-, Alkyl-[O-Aryl]ₙ-O-, Aryl-[O-Alkyl]ₙ- und Aryl-[O-Alkyl]ₙ-O- mit n = 1 bis 800 und Alkyl = -CH₂-, -CH₃, -(CH₂)₂-, -C₂H₅, -(CH₂)₃-, -C₃H₇,-(CH₂)₄-, -C₄H₉, -(CH₂)₅-, -C₅H₁₁, -(CH₂)₆-, -C₆H₁₃ oder Cycloalkyl oder
- ein substituiertes Derivat eines dieser Reste ist.

R₂ und R₃ sind unabhängig voneinander Elektronenakzeptorsubstituenten mit -I und/oder -M-Effekt sind, welche die negative Ladung des Imidazolat-Anions stabilisieren.

n hat bevorzugt einen Wert zwischen 1 und 400, besonders bevorzugt zwischen 1 und 100, insbesondere zwischen 1 und 20. Innerhalb des letztgenannten Bereichs ist ein Wert zwischen 1 und 10, insbesondere zwischen 2 und 10, bevorzugt.

Das Imidazolat-Anion ist einfach negativ geladen. Das Magnesiumsalz setzt sich entsprechend formal aus zwei der einfach geladenen Imidazolat-Anionen und einem zweifach positiv geladenen Magnesium-Kation zusammen.

Bei der erfindungsgemäßen Batterie handelt es sich um eine sekundäre Batterie, also um eine wieder aufladbare Batterie.

R₁ kann in unterschiedlichen Varianten vorliegen. Fest steht, dass R₁ entweder eine Alkyl- oder eine Aryl-Gruppe ist oder eine oder mehrere Alkyl- und/oder Aryl-Gruppen, also mindestens eine Alkyl- und/oder Aryl-Gruppe, umfasst.
Die Cycloalkyl-Gruppe kann bevorzugt eine C₅-C₆-Cycloalkyl-Gruppe sein. Besonders bevorzugt ist R₁ oder die mindestens eine Alkylgruppe in R₁ eine Cyclopentyl- oder eine Cyclohexylgruppe.
Die Cycloalkyl-Gruppe kann eine Cycloalkyl-Gruppe sein, in der ein oder 2 Kohlenstoffatome durch Heteroatome ersetzt sind. Bevorzugt sind Heterozyklen mit 5 oder 6 Ringatomen und mit Sauerstoff oder Stickstoff als Heteroatomen. Besonders bevorzugt ist R₁ oder die mindestens eine Alkyl-Gruppe in R₁ eine Tetrahydrofuranyl-, eine 1,4-Dioxanyl- oder eine Piperidinyl-Gruppe.
R₁ oder mindestens eine der in R₁ enthaltenen Aryl-Gruppen kann eine C₅-C₂₀-Aryl-Gruppe, insbesondere eine C₆-C₁₀-Aryl-Gruppe, sein. Besonders bevorzugt ist R₁ oder die mindestens eine Aryl-Gruppe in R₁ eine Phenyl- oder Naphtyl-Gruppe.
R₁ oder mindestens eine der in R₁ enthaltenen Aryl-Gruppen kann eine Aryl-Gruppe, in der ein oder 2 Kohlenstoffatome durch Heteroatome ersetzt sind, sein. Bevorzugt sind Heterozyklen mit 5 oder 6 Ringatomen und mit Sauerstoff oder Stickstoff als Heteroatomen. Besonders bevorzugt ist R₁ oder die mindestens eine Aryl-Gruppe in R₁ eine Furyl-, eine Pyrrolyl- oder eine Pyridyl-Gruppe.

In den obigen sowie in den nachfolgenden Formeln gilt allgemein, dass ein endständiger Bindestrich "-" der Bindung zum Imidazolat-Heterocyclus entspricht.

In einigen bevorzugten Ausführungsformen ist R₁ definiert wie folgt:
R₁ ist ein Oligo- oder Polyether-Rest aus der Gruppe mit Alkyl-[O-Alkyl]ₙ- und Alkyl-[O-Alkyl]ₙ- O-, Aryl-[O-Alkyl]ₙ- und Aryl-[O-Alkyl]ₙ-O- und weist eine der folgenden Formeln auf: 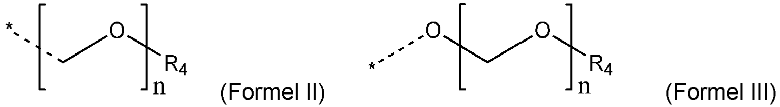 In diesen Formeln ist n = 1 - 800 und R₄ ist eine Alkyl- oder eine Aryl-Gruppe. Die Alkyl- oder Aryl-Gruppe ist bevorzugt wie oben definiert.
n hat auch hier bevorzugt einen Wert zwischen 1 und 400, besonders bevorzugt zwischen 1 und 100, insbesondere zwischen 1 und 20. Innerhalb des letztgenannten Bereichs ist ein Wert zwischen 1 und 10, insbesondere zwischen 2 und 10, bevorzugt.
R₁ ist ein Oligo- oder Polyether-Rest aus der Gruppe mit Aryl-[O-Aryl]ₙ-, Aryl-[O-Aryl]ₙ-O-, Alkyl-[O-Aryl]ₙ- und Alkyl-[O-Aryl]ₙ-O- und weist eine der folgenden Formeln auf: 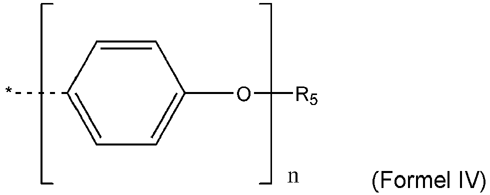 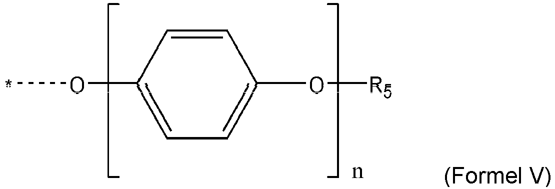 In diesen Formeln ist n = 1 - 800 und R₅ ist eine Alkyl- oder eine Aryl-Gruppe. Die Alkyl- oder Aryl-Gruppe ist bevorzugt wie oben definiert. n hat auch hier bevorzugt einen Wert zwischen 1 und 400, besonders bevorzugt zwischen 1 und 100, insbesondere zwischen 1 und 20. Innerhalb des letztgenannten Bereichs ist ein Wert zwischen 1 und 10, insbesondere zwischen 2 und 10, bevorzugt.

Es ist besonders bevorzugt, dass bei mindestens einer der Alkyl- oder Aryl-Gruppen in den Formeln I bis V ein Wasserstoffatom (H-Atom) durch ein Fluor-, Chlor-, Brom- oder lod-Atom oder durch eine Cyano-, Carbonyl-, Hydroxy-, Carboxy-, Amido-, Amino-, Nitro-, Phosphonyl- oder Sulfonyl-Gruppe ersetzt ist. Es handelt sich bei R₁, R₄ und/oder R₅ und/oder bei der mindestens einen in R₁ enthaltenen Alkyl-Gruppe und/oder bei der mindestens einen in R₁ enthaltenen Aryl-Gruppe also bevorzugt um ein substituiertes Derivat einer Alkyl- oder Aryl-Gruppe.

In einigen besonders bevorzugten Ausführungsformen ist R₁ definiert wie folgt: R₁ ist ein Oligo- oder Polyether-Rest aus der Gruppe mit Alkyl-[O-Alkyl]ₙ- und Alkyl-[O-Alkyl]ₙ- O-, Aryl-[O-Alkyl]ₙ- und Aryl-[O-Alkyl]ₙ-O- und weist eine der folgenden Formeln auf:

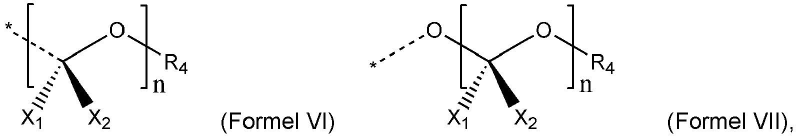

In diesen Formeln ist n = 1 - 800 und R₄ ist definiert wie in den Formeln II und III. X₁ und X₂ sind unabhängig voneinander H oder einer der oben genannten Substituenten für Wasserstoffatome der Alkyl- oder Aryl-Gruppen in den Formeln I bis V. Besonders bevorzugt sind X₁ und X₂ jeweils ein Halogen, insbesondere Fluor oder Chlor oder Brom.

n hat auch hier bevorzugt einen Wert zwischen 1 und 400, besonders bevorzugt zwischen 1 und 100, insbesondere zwischen 1 und 20. Innerhalb des letztgenannten Bereichs ist ein Wert zwischen 1 und 10, insbesondere zwischen 2 und 10, bevorzugt.

R₁ ist ein Oligo- oder Polyether-Rest aus der Gruppe mit Aryl-[O-Aryl]ₙ-, Aryl-[O-Aryl]ₙ-O-, Alkyl-[O-Aryl]ₙ- und Alkyl-[O-Aryl]ₙ-O- und weist eine der folgenden Formeln auf:

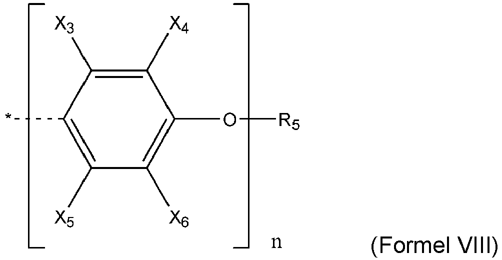

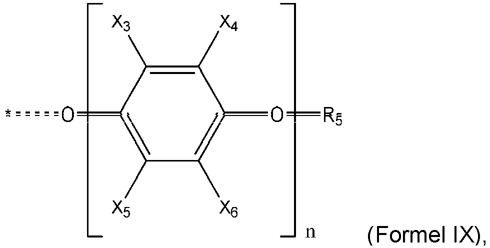

In diesen Formeln ist n = 1 - 800 und R₅ ist definiert wie in den Formeln IV und V. X₃ bis X₆ sind unabhängig voneinander H oder einer der oben genannten Substituenten für Wasserstoffatome der Alkyl- oder Aryl-Gruppen in den Formeln I bis V. Besonders bevorzugt sind X₃ und X₆ jeweils ein Halogen, insbesondere Fluor oder Chlor oder Brom.
n hat bevorzugt einen Wert zwischen 1 und 400, besonders bevorzugt zwischen 1 und 100, insbesondere zwischen 1 und 20. Innerhalb des letztgenannten Bereichs ist ein Wert zwischen 1 und 10, insbesondere zwischen 2 und 10, bevorzugt.

Es ist bevorzugt, dass die Reste R₂ und R₃ unabhängig voneinander ein Fluor-, Chlor-, Brom- oder lod-Atom oder eine Cyano-, Carbonyl-, Hydroxy-, Carboxy-, Amido-, Amino-, Nitro-, Phosphonyl- oder Sulfonyl-Gruppe oder eine trihalogenierte Methyl-Gruppe (-CX₃ mit X = F, Cl, Br oder I) sind.

In einer weiteren besonders bevorzugten Ausführungsform weist das Imidazolat-Anion die Formel X

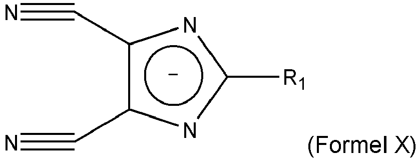

Auf. In Formel X ist R₁ definiert ist wie in Formel I. Besonders bevorzugt weist R₁ eine der in den Formeln II bis IX dargestellten Strukturen auf.

Eine erfindungsgemäße Magnesiumbatterie kann mehrere unterschiedliche Lösungsmittel enthalten. Es gibt fünf bevorzugte Varianten:
Das Lösungsmittel ist oder umfasst ein Amid, insbesondere Dimethylacetamid (DMA) und Dimethylformamid (DMF),
das Lösungsmittel ist oder umfasst ein Nitril, insbesondere Acetonitril und Adiponitril,
das Lösungsmittel ist oder umfasst ein organisches Carbonat, insbesondere Ethylcarbonat (EC), Diethylcarbonat (DEC), Dimethylcarbonat (DMC), Ethylmethylcarbonat (EMC) und Propylencarbonat (PC),
das Lösungsmittel ist oder umfasst einen Ether, insbesondere Dimethylether, Diethylether, Diisopropylether und Tetrahydrofuran,
Das Lösungsmittel ist eine Mischung aus mindestens zwei der oben genannten Lösungsmittel.

Besonders bevorzugt zeichnet sich eine erfindungsgemäße Magnesiumbatterie durch eine Kombination der folgenden Merkmale aus:
Das Elektrolytsystem umfasst als Lösungsmittel ein organisches Carbonat und/oder einen Ether und das Magnesiumsalz umfasst ein Imidazolat-Anion der Formel wobei der Rest R₁ in Formel I eine der in den Formeln II bis IX dargestellten Strukturen aufweist, und wobei die Reste R₂ und R₃ unabhängig voneinander ein Fluor-, Chlor-, Brom- oder lod-Atom oder eine Cyano-, Carbonyl-, Hydroxy-, Carboxy-, Amido-, Amino-, Nitro-, Phosphonyl- oder Sulfonyl-Gruppe oder eine trihalogenierte Methyl-Gruppe (-CX₃ mit X = F, Cl, Br oder I) sind.
Das Elektrolytsystem umfasst als Lösungsmittel ein Amid, insbesondere DMA und/oder DMF, und das Magnesiumsalz umfasst ein Imidazolat-Anion der Formel I, wobei der Rest R₁ in Formel I eine Alkyl- oder Aryl-Gruppe wie oben definiert ist, in der ein Wasserstoffatom (H-Atom) durch ein Fluor-, Chlor-, Brom- oder lod-Atom oder durch eine Cyano-, Carbonyl-, Hydroxy-, Carboxy-, Amido-, Amino-, Nitro-, Phosphonyl- oder Sulfonyl-Gruppe ersetzt ist, und wobei die Reste R₂ und R₃ unabhängig voneinander ein Fluor-, Chlor-, Brom- oder lod-Atom oder eine Cyano-, Carbonyl-, Hydroxy-, Carboxy-, Amido-, Amino-, Nitro-, Phosphonyl- oder Sulfonyl-Gruppe oder eine trihalogenierte Methyl-Gruppe (-CX₃ mit X = F, Cl, Br oder I) sind.

Nicht erfindungsgemäß, an Stelle des Lösungsmittels oder zusätzlich zu diesem kann das Elektrolytsystem auch eine ionische Flüssigkeit umfassen. Bei ionischen Flüssigkeiten handelt es sich bekanntlich um organische Salze, deren Ionen durch Ladungsdelokalisierung und sterische Effekte die Bildung eines stabilen Kristallgitters behindern. Bereits geringe thermische Energie genügt daher, um die Gitterenergie zu überwinden und die feste Kristallstruktur aufzubrechen. Es handelt sich bei ionischen Flüssigkeiten somit um Salze, die bei Temperaturen unter 100 °C flüssig sind, ohne dass das Salz dabei in einem Lösungsmittel wie Wasser gelöst ist. Vorliegend können als ionische Flüssigkeiten insbesondere solche auf Basis von Pyridinium-, Imidazolium- und/oder Ammoniumionen zum Einsatz kommen.

Die negative Elektrode einer erfindungsgemäßen Magnesiumbatterie kann unterschiedliche Aktivmaterialien umfassen. Die bevorzugtesten Varianten sind die folgenden:
Die negative Elektrode umfasst als Aktivmaterial mindestens eine Kohlenstoffmodifikation, insbesondere aus der Gruppe mit amorpher Kohlenstoff, Graphit, graphitierter Kohlenstoff, Graphen, Fulleren und Kohlenstoffnanoröhrchen.
Als amorpher Kohlenstoff kann Hart- und/ oder Weichkohlenstoff, insbesondere mesoporöser Hart- und/oder Weichkohlenstoff, eingesetzt werden. Bei dem Graphit kann es sich insbesondere um synthetisches mesophasiges Graphit und/oder natürliches Graphit (Naturgraphit) handeln.
Die negative Elektrode umfasst als Aktivmaterial mindestens ein Metall, insbesondere aus der Gruppe mit Silizium, Germanium, Zinn, Zink, Antimon, Bismut, Aluminium und Mangan, oder eine Legierung eines dieser Metalle, insbesondere eine Legierung mit Magnesium.
Besonders bevorzugt wird ein Aktivmaterial der allgemeinen Formel MgₓM_{y} eingesetzt, wobei M ein Mitglied der Gruppe mit Silizium, Germanium, Zink, Antimon, Bismut, Aluminium, Mangan oder Kohlenstoff mit 0 ≤ x ≤ 2 und 1 ≤ y ≤ 120 ist.
Die negative Elektrode umfasst als Aktivmaterial ein Komposit oder eine Mischung aus mindestens einem der in oben genannten Metalle oder der in oben genannten Legierung und der in oben genannten mindestens einen Kohlenstoffmodifikation.
Bei dem Komposit aus der Kohlenstoffmodifikation und dem Metall handelt es sich bevorzugt um Mehrschichtpartikel, insbesondere Partikel mit einer Kern-Hülle-Struktur. Dabei ist es bevorzugt, dass der Kern aus der Kohlenstoffmodifikation, beispielsweise einem Graphitpartikel, und die Hülle aus einem Metall, beispielsweise Silizium, bestehen. Besonders bevorzugt eingesetzte Partikel mit einer Kern-Hülle-Struktur sind Graphit-Silizium-Partikel, Graphit-Germanium-Partikel, Graphit-Zinn-Partikel und Mischungen davon.
Insbesondere können auch Kompositpartikel eingesetzt werden, die einen Kern aus Graphit sowie eine diesen Kern umgebende Hülle aus amorphem Kohlenstoff mit darin eingelagerten nanoskaligen Metallpartikeln, insbesondere Silizium- und/ oder Germanium-Partikeln, aufweisen. Die Herstellung solcher Partikel ist in der EP 2 573 845 A1 beschrieben. Daneben kann es sich bei den Kompositpartikeln auch um Kohlenstoffpartikel handeln, die eine Hülle aus metallischem Silizium aufweisen. Eine solche Hülle kann beispielsweise durch thermische Zersetzung eines Silans in Gegenwart der KohlenstoffPartikel gebildet werden, wie das in der DE 10 2008 063 552 A1 beschrieben ist. Daneben können auch Partikel eingesetzt werden, die einen metallischen Kern, insbesondere einen Siliziumkern, aufweisen und eine Hülle aus einem Kohlenstoffmaterial. Derartige Partikel lassen sich beispielsweise durch Beschichtung der entsprechenden Metallpartikel mit einem kohlenstoffhaltigen Material und anschließender Pyrolyse des kohlenstoffhaltigen Materials herstellen.
Die Mischung oder das Komposit weisen bevorzugt die folgende Zusammensetzung auf:
   - 10 bis 90 Gew.-% der in 10.a. genannten mindestens einen Kohlenstoffmodifikation und
   - 90 bis 10 Gew.-% mindestens einem der in 10.b. genannten Metalle oder der in 10.b. genannten Legierung.
Die Prozentangaben beziehen sich dabei auf trockenes Aktivmaterial und ergänzen sich zu 100 Gew.-%.

Überraschenderweise hat sich herausgestellt, dass die genannten Aktivmaterialien, die bislang für Zellen und Batterien auf Basis von Lithium-Ionen eingesetzt wurden, auch zu einer reversiblen Ein- und Auslagerung von Magnesiumionen befähigt sind. Ein entscheidender Faktor für die Reversibilität der Ein- und Auslagerung ist offensichtlich das verwendete Elektrolytsystem. Wie anhand der Ausführungsbeispiele unten aufgezeigt werden wird, lassen sich unter Verwendung des oben definierten Magnesiumsalzes vielversprechende Ergebnisse erzielen.

Besonders gute Ergebnisse wurden mit Elektrolytsystemen wie oben beschrieben erzielt.

Insbesondere die in oben genannten Aktivmaterialien haben den Vorteil, dass sie (anders als metallisches Magnesium) in Kombination mit vielen klassischen Elektrolytsystemen mit hoher oxidativer Stabilität verwendet werden können. Dies erlaubt wiederum den Betrieb der erfindungsgemäßen Batterie bei höheren Spannungen als dies bei konventionellen Magnesiumbatterien möglich war.

In der Regel enthält die mindestens eine negative Elektrode das zur Ein- und Auslagerung von Magnesiumionen befähigte Aktivmaterial in partikulärer, insbesondere sphärischer und/oder sphäroider, Form. Zur Ein- und Auslagerung von Magnesiumionen befähigte Metalle werden bevorzugt mit einer mittleren Partikelgröße im Bereich zwischen 1 nm und 10 µm, insbesondere 10 nm und 1 µm, eingesetzt. Die mindestens eine Kohlenstoffmodifikation wird bevorzugt mit einer mittleren Partikelgröße im Bereich zwischen 1 nm und 500 µm insbesondere 10 nm und 200 µm, eingesetzt.

Die mindestens eine positive Elektrode der erfindungsgemäßen Magnesiumbatterie enthält als Aktivmaterial vorzugsweise mindestens eine Metallverbindung, insbesondere eine Metalloxidverbindung, welche Magnesium in Form von Ionen reversibel ein- oder auszulagern vermag.

Bevorzugt handelt es sich bei der mindestens einen Metallverbindung um eine Verbindung auf Basis von Aluminium, Nickel, Cobalt, Mangan, Chrom, Eisen, Strontium und Vanadium in Kombination mit zumindest einem Element aus der Gruppe mit Sauerstoff, Fluor, Schwefel und Phosphor. Besonders bevorzugt handelt es sich um ein Magnesium-Metalloxid und/oder um ein Magnesium-Metallphosphat. Insbesondere kann es sich um Vanadiumoxid (V₂O₅) handeln.

In einer besonders vorteilhaften Ausgestaltung handelt es sich bei der positiven Elektrode um eine Elektrode, die auch in herkömmlichen Lithiumbatterien eingesetzt werden kann.

Die Elektroden der erfindungsgemäßen Batterie umfassen neben den genannten Aktivmaterialien auch elektrochemisch inaktive Komponenten. Als elektrochemisch inaktive Komponenten sind insbesondere leitfähigkeitsverbessernde Additive, gegebenenfalls noch weitere Additive wie beispielsweise Korrosionsinhibitoren, Elektrodenbinder und Stromableiter zu nennen.

Über Stromableiter werden Elektronen den Elektroden zu- oder abgeführt. Die Elektroden umfassen enthält sie in der Regel einen metallischen Stromableiter, beispielsweise in Form einer Kupferfolie oder Nickelfolie oder in Form eines Kupfernetzes oder eines Nickelnetzes.

Elektrodenbinder sorgen für die mechanische Stabilität der Elektroden sowie für die Kontaktierung der Partikel aus Aktivmaterial untereinander und zum Stromableiter. Bevorzugt werden im Rahmen der vorliegenden Erfindung als Elektrodenbinder mit organischen Lösungsmitteln prozessierbare Binder, z.B. fluorhaltige Kunststoffe wie beispielsweise Polyvinylidenfluorid (PVDF) und/oder Polytetrafluorethylen (PTFE), eingesetzt. Bevorzugt werden aprotische organische Lösungsmittel wie beispielsweise N-Methyl-2-pyrrolidon (NMP) verwendet. Problemlos können aber auch wässrig prozessierbare Elektrodenbinder, beispielsweise Elektrodenbinder auf Zellulosebasis wie Carboxymethylzellulose (CMC), eingesetzt werden. Ein geeignetes leitfähigkeitsverbesserndes Additiv ist beispielsweise Ruß.

Vorzugsweise liegt das Aktivmaterial der mindestens einen negativen Elektrode eingebettet in eine Matrix aus dem Elektrodenbinder vor.

Zu einer verbesserten elektrischen Anbindung der elektrochemisch aktiven Partikel an den Stromableiter können weiterhin auch die leitfähigkeitsverbessernden Additive beitragen. Die elektrochemisch inaktiven Komponenten sollten zumindest im Potenzialbereich der jeweiligen Elektrode elektrochemisch stabil sowie chemisch inert gegenüber gängigen Elektrolyten sein.

Die negative Elektrode der erfindungsgemäßen Batterie weist bevorzugt die folgende Zusammensetzung auf:
- zwischen 10 und 100 Gew.-%, vorzugsweise 20 und 98 Gew.-%, insbesondere 40 und 95 Gew.-%, des Aktivmaterials,
- zwischen 0 und 50 Gew.-%, vorzugsweise 1 und 40 Gew.-%, insbesondere 2 und 20 Gew.-%, des Elektrodenbinders und
- zwischen 0 und 70 Gew.-%, vorzugsweise 1 und 60 Gew.-%, insbesondere 2 und 50 Gew.-%, des leitfähigkeitsverbessernden Additivs.

Die Prozentangaben beziehen sich hierbei auf die Gesamtmasse der negativen Elektrode ohne Berücksichtigung eines gegebenenfalls vorhandenen Stromableiters sowie ohne Berücksichtigung eines Elektrolytsystems (maßgeblich ist der trockene Zustand).

Das oben beschriebene Elektrolytsystem, das mindestens eines der beschriebenen Lösungsmittel sowie ein darin zumindest teilweise gelöstes Magnesiumsalz mit einem Imidazolat-Anion der Formel I umfasst, ist separat, also unabhängig davon, ob und wie es in einer Batterie verwendet wird, Gegenstand der vorliegenden Erfindung. Besonders geeignet ist es aber natürlich für den Einsatz in der beschriebenen Magnesiumbatterie.

Für das Lösungsmittel des Elektrolytsystems gilt das Folgende:
- das Lösungsmittel ist oder umfasst ein Amid, insbesondere Dimethylacetamid (DMA) und Dimethylformamid (DMF), oder
- das Lösungsmittel ist oder umfasst ein Nitril, insbesondere Acetonitril und Adiponitril, oder
- das Lösungsmittel ist oder umfasst ein organisches Carbonat, insbesondere Ethylcarbonat (EC), Diethylcarbonat (DEC), Dimethylcarbonat (DMC), Ethylmethylcarbonat (EMC) und Propylencarbonat (PC), oder
- das Lösungsmittel ist ein Ether oder umfasst einen Ether, insbesondere Dimethylether, Diethylether, Diisopropylether und Tetrahydrofuran, oder
- das Lösungsmittel ist eine Mischung aus mindestens zwei der vorgenannten Lösungsmittel.

Die Konzentration des gelösten Magnesiumsalzes in dem Lösungsmittel beträgt zwischen 0,1 mol/I und 3,5 mol/l. Vorzugsweise beträgt die Konzentration des Magnesiumsalzes in dem Lösungsmittel zwischen 0,1 mol/I und 2,5 mol/l, besonders bevorzugt zwischen 0,1 mol/I und 2,0 mol/l.

In einer bevorzugten Ausführungsform des Elektrolytsystems wird als Magnesiumsalz des Imidazolat-Derivats die Verbindung Magnesium-(II)-bis(4,5-Dicyano-2-methylimidazolid) verwendet und als Lösungsmittel Dimethylformamid eingesetzt.

In einer weiteren bevorzugten Ausführungsform des Elektrolytsystems wird als Magnesiumsalz des Imidazolat-Derivats die Verbindung Magnesium-(II)-bis(4,5-Dicyano-2-methoxyimidazolid) verwendet und als Lösungsmittel Propylencarbonat (PC) eingesetzt.

In einer dritten bevorzugten Ausführungsform des Elektrolytsystems wird als Lösungsmittel ein organisches Carbonat und/oder ein Ether und als Magnesiumsalz ein Magnesiumsalz des Imidazolat-Anions gemäß Formel I eingesetzt, wobei der Rest R₁ in Formel I eine der in den Formeln II bis IX dargestellten Strukturen aufweist, und wobei die Reste R₂ und R₃ unabhängig voneinander ein Fluor-, Chlor-, Brom- oder lod-Atom oder eine Cyano-, Carbonyl-, Hydroxy-, Carboxy-, Amido-, Amino-, Nitro-, Phosphonyl- oder Sulfonyl-Gruppe oder eine trihalogenierte Methyl-Gruppe (-CX₃ mit X = F, Cl, Br oder I) sind.

Vorzugsweise liegt das Magnesiumsalz vollständig gelöst in dem Lösungsmittel vor. Es ist allerdings auch denkbar, dass in der positiven und/oder der negativen Elektrode ein Anteil des Magnesiumsalzes ungelöst vorliegt.

Weitere Merkmale der Erfindung ergeben sich auch aus der nun folgenden Beschreibung einiger bevorzugter Ausführungsformen der Erfindung. Die beschriebenen bevorzugten Ausführungsformen dienen lediglich zur Erläuterung und zum besseren Verständnis der Erfindung und sind in keiner Weise einschränkend zu verstehen.

### Beispielteil

Zur Herstellung einer erfindungsgemäßen negativen Elektrode kann allgemein vorgegangen werden wie folgt: Es wird eine pastöse Masse (der sogenannte Elektrodenslurry) enthaltend ein Gemisch aus einem Prozesslösungsmittel, mindestens einem der oben beschriebenen Aktivmaterialien, einem geeigneten Elektrodenbinder und einem der beschriebenen Leitfähigkeitsadditive bereitgestellt. Die Wahl des Prozesslösungsmittels hängt von der Art des verwendeten Elektrodenbinders ab. Wird z.B. eine polar modifizierte Carboxymethylzellulose als Elektrodenbinder gewählt, so ist Wasser als Prozesslösungsmittel bevorzugt. Bei Verwendung von PVDF ist NMP als Prozesslösungsmittel geeigneter. Die pastöse Masse wird dann als dünne Schicht auf eine als Stromableiter dienende Metallfolie, beispielsweise eine Kupferfolie, aufgebracht. Als Techniken zum Aufbringen der Masse sind beispielsweise Rakeln; Pinseln oder Tauchbeschichten zu nennen. Anschließend wird das Prozesslösungsmittel entfernt, gegebenenfalls unter erhöhten Temperaturen. Die getrocknete Schicht auf der Metallfolie wird anschließend kalandriert. Die so erhaltene Elektrode kann mit dem beschriebenen Elektrolytsystem getränkt und mit einer positiven Elektrode kombiniert werden.

Gemäß dieser allgemeinen Arbeitsvorschrift wurden unter Verwendung einer Kupferfolie als Stromableiter verschiedene Ausführungsformen negativer Elektroden gemäß der vorliegenden Erfindung gefertigt.
(1) Zur Bereitstellung des Elektrodenslurry wurden die folgenden Komponenten miteinander vermischt: 7 Gew.-% PVDF-Binder (Kynar 761), 3 Gew.-% Leitruß (Super-P), 90 Gew.-% Graphit (Natural Graphite, Hersteller Qingdao), NMP.
   Der verwendete Elektrolyt war Dimethylformamid (DMF) + 0,5 M Magnesium-(II)-bis(4,5-Dicyano-2-methylimidazolid).
(2) Zur Bereitstellung des Elektrodenslurry wurden die folgenden Komponenten miteinander vermischt: 10 Gew.-% Carboxymethylcellulose-Binder, 90 Gew.-% Graphit (Synthetic Graphite SFG-44, Hersteller Timcal), Wasser.
   Der verwendete Elektrolyt war Dimethylformamid (DMF) + 0,5 M Magnesium-(II)-bis(4,5-Dicyano-2-methylimidazolid).
(3) Zur Bereitstellung des Elektrodenslurry wurden die folgenden Komponenten miteinander vermischt: 7 Gew.-% PVDF-Binder (Kynar 761), 3 Gew.-% Leitruß (Super-P), 90 Gew.-% Graphit (Natural Graphite, Hersteller Qingdao), NMP.

Der verwendete Elektrolyt war Diethylether (DEE) + 0,5 M Magnesium-(II)-bis(4,5-Dicyano-2-methoxyimidazolid).

Die gemäß (1) hergestellte Elektrode wurde elektrochemisch charakterisiert.

### Figurenbeschreibung

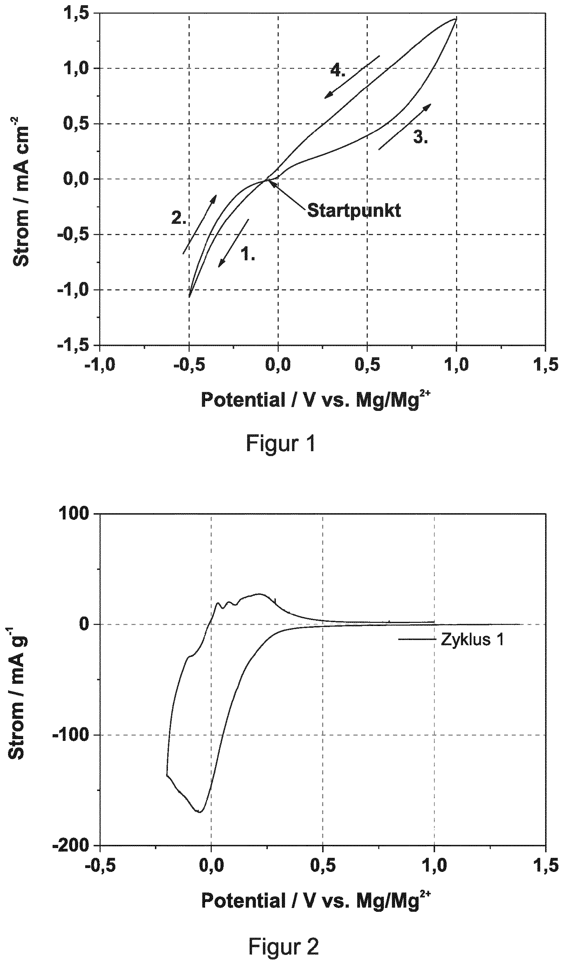

Figur 1 zeigt das Ergebnis der zyklovoltammetrischen Untersuchung des Magnesiumsalz aus der negativen Elektrode (1) mit Arbeitselektrode (WE): metallisches Magnesium, Gegenelektrode (CE): metallisches Magnesium und Referenzelektrode (RE): metallisches Magnesium. Die gewählte Vorschubgeschwindigkeit betrug 25 mV/s. Die symmetrische Zelle zeigt eindeutig eine metallische Magnesiumabscheidung (1. und 2.) und -auflösung (3. und 4.).
Figur 2 zeigt den ersten Zyklus der zyklovoltammetrischen Untersuchung einer negativen Elektrode gemäß (1). Die gewählte Vorschubgeschwindigkeit betrug 100 µV/s.

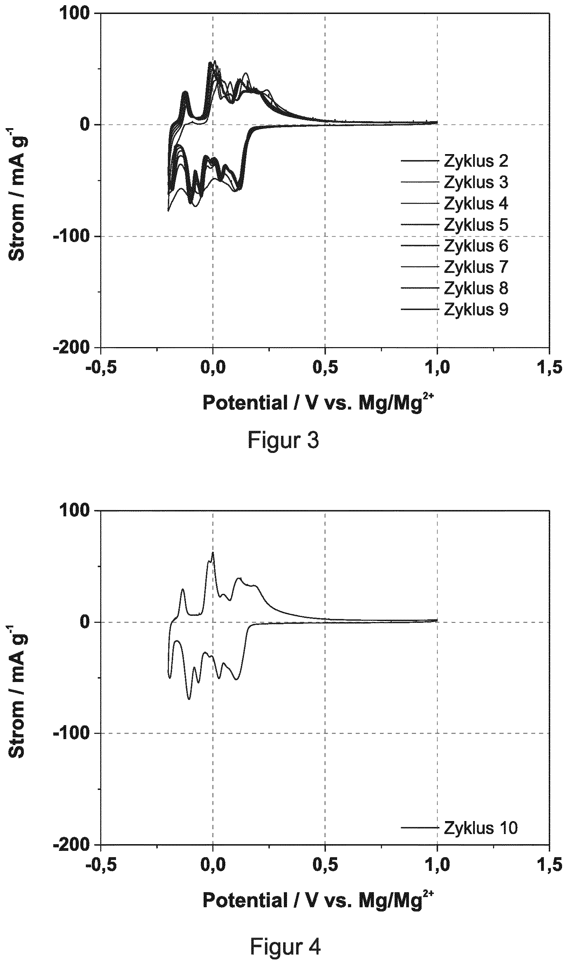

Figur 3 zeigt den zweiten bis neunten Zyklus der zyklovoltammetrischen Untersuchung einer negativen Elektrode gemäß (1). Die gewählte Vorschubgeschwindigkeit betrug 100 µV/s.
Figur 4 zeigt den zehnten Zyklus der zyklovoltammetrischen Untersuchung einer negativen Elektrode gemäß (1). Die gewählte Vorschubgeschwindigkeit betrug 100 µV/s.

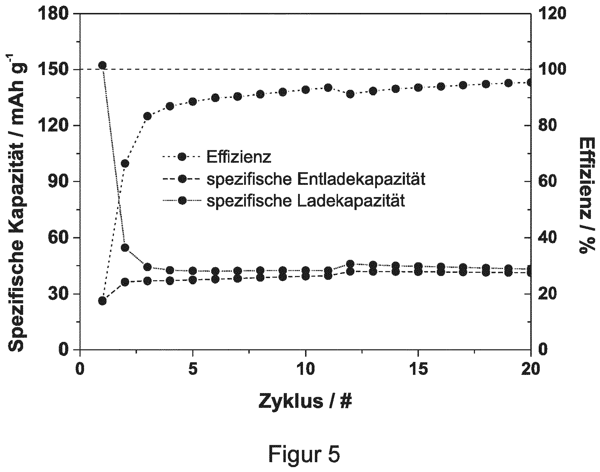

Figur 5 zeigt Lade-/Entladetests einer erfindungsgemäßen negativen Elektrode gemäß (1). Im ersten Zyklus wurde die Abschaltspannung bis 0,0 V gegen eine Magnesiumstandardelektrode (Mg/Mg²⁺) gewählt mit 0,1 C. Danach wurde die Abschaltspannung für die nächsten fünf Zyklen bis -0,2 V gegen Mg/Mg²⁺ erweitert mit 0,1 C. Die letzten fünf Zyklen wurden bei gleichen Spannungskriterien mit 0,05 C gewählt. Es ist eine eindeutig reversible elektrochemische Reaktion ersichtlich, die über mehrere Zyklen nachgewiesen werden kann.

## Patentansprüche

1. Sekundäre Magnesiumbatterie mit den folgenden Merkmalen:
a. Sie umfasst mindestens eine positive Elektrode, die ein Aktivmaterial enthält, das Magnesiumionen reversibel ein- und auszulagern vermag,
b. sie umfasst mindestens eine negative Elektrode, die ein Aktivmaterial enthält, das Magnesiumionen reversibel ein- und auszulagern vermag,
c. sie umfasst ein Elektrolytsystem aus einem Lösungsmittel und einem Magnesiumsalz, das zumindest teilweise in dem Lösungsmittel gelöst ist, über das ein Ladungsaustausch zwischen der mindestens einen positiven und der mindestens einen negativen Elektrode stattfinden kann, wobei die Konzentration des gelösten Magnesiumsalzes in dem Lösungsmittel zwischen 0,1 und 3,5 mol/I beträgt, und
d. das Magnesiumsalz weist ein Imidazolat-Anion der Formel I 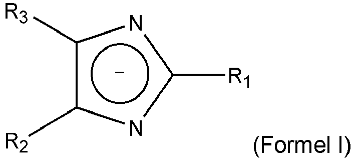 auf, in der R₁
- ein Rest aus der Gruppe mit Alkyl-, Aryl-, Alkyl-Aryl-, Aryl-Alkyl-, Alkyl-O-, Aryl-O-, Alkyl-O-Alkyl-, Aryl-O-Aryl-, Alkyl-O-Aryl- und Aryl-O-Alkyl- mit Alkyl = -CH₂-,-CH₃, -(CH₂)₂-, -C₂H₅, -(CH₂)₃-, -C₃H₇, -(CH₂)₄-, -C₄H₉, -(CH₂)₅-, -C₅H₁₁, -(CH₂)₆-,-C₆H₁₃ oder Cycloalkyl- oder
- ein Oligo- oder Polyether-Rest aus der Gruppe mit Alkyl-[O-Alkyl]ₙ-, Alkyl-[O-Alkyl]n-O-, Aryl-[O-Aryl]ₙ-, Aryl-[O-Aryl]n-O-, Alkyl-[O-Aryl]ₙ-, Alkyl-[O-Aryl]n-O-, Aryl-[O-Alkyl]ₙ- und Aryl-[O-Alkyl]ₙ-O- mit n = 1 bis 800 und Alkyl = -CH₂-, -CH₃,-(CH₂)₂-, -C₂H₅, -(CH₂)₃-, -C₃H₇, -(CH₂)₄-, -C₄H₉, -(CH₂)₅-, -C₅H₁₁, -(CH₂)₆-, -C₆H₁₃ oder Cycloalkyl- oder
- ein substituiertes Derivat eines dieser Reste ist,
und R₂ und R₃
- unabhängig voneinander Elektronenakzeptorsubstituenten mit -I und/oder -M-Effekt sind, welche die negative Ladung des Imidazolat-Anions stabilisieren.

2. Magnesiumbatterie nach Anspruch 1, mit mindestens einem der folgenden Merkmale:
- R₁ oder mindestens ein Alkyl in R₁ ist eine C₅-C₆- Cycloalkyl-Gruppe.
- R₁ oder mindestens ein Alkyl in R₁ ist eine Cycloalkyl-Gruppe, in der ein oder 2 Kohlenstoffatome durch Heteroatome ersetzt sind.
- R₁ ist oder umfasst eine C₅-C₂₀-Aryl-Gruppe, insbesondere eine C₆-C₁₀-Aryl-Gruppe.
- R₁ ist oder umfasst eine Aryl-Gruppe, in der ein oder 2 Kohlenstoffatome durch Heteroatome ersetzt sind.

3. Magnesiumbatterie nach Anspruch 1 oder Anspruch 2, mit einem der folgenden Merkmale:
a. R₁ ist ein Oligo- oder Polyether-Rest aus der Gruppe mit Alkyl-[O-Alkyl]ₙ- und Alkyl-[O-Alkyl]ₙ- O-, Aryl-[O-Alkyl]ₙ- und Aryl-[O-Alkyl]ₙ-O- und weist eine der folgenden Formeln auf 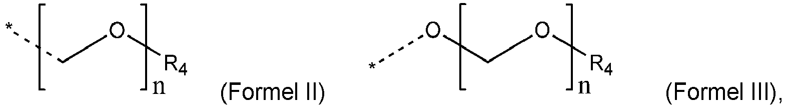 in denen n = 1 bis 800 und R₄ eine Alkyl- oder eine Aryl-Gruppe ist.
b. R₁ ist ein Oligo- oder Polyether-Rest aus der Gruppe mit Aryl-[O-Aryl]ₙ-, Aryl-[O-Aryl]ₙ-O-, Alkyl-[O-Aryl]ₙ- und Alkyl-[O-Aryl]ₙ-O- und weist eine der folgenden Formeln auf 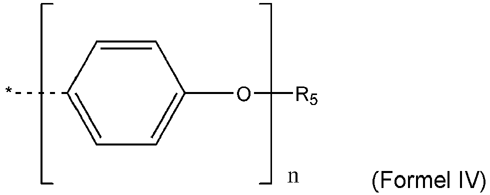 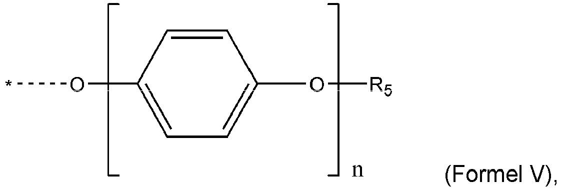 in denen n = 1 bis 800 und R₅ eine Alkyl- oder eine Aryl-Gruppe ist.

4. Magnesiumbatterie nach einem der vorhergehenden Ansprüche, wobei bei mindestens einer der Alkyl- oder Aryl-Gruppen in den Formeln I - V mindestens ein H-Atom durch ein Fluor-, Chlor-, Brom- oder lod-Atom oder durch eine Cyano-, Carbonyl-, Hydroxy-, Carboxy-, Amido-, Amino-, Nitro-, Phosphonyl- oder Sulfonyl-Gruppe ersetzt ist.

5. Magnesiumbatterie nach Anspruch 4, mit einem der folgenden Merkmale:
a. R₁ ist ein Oligo- oder Polyether-Rest aus der Gruppe mit Alkyl-[O-Alkyl]ₙ- und Alkyl-[O-Alkyl]ₙ- O-, Aryl-[O-Alkyl]ₙ- und Aryl-[O-Alkyl]ₙ-O- und weist eine der folgenden Formeln auf 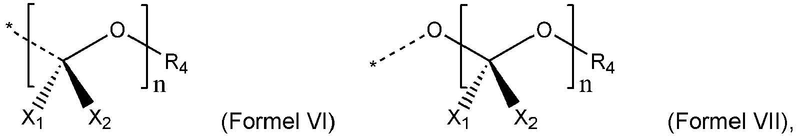 in denen n = 1 bis 800 und R₄ definiert ist wie in den Formeln II und III und X₁ und X₂ unabhängig voneinander H oder einer der Substituenten aus Anspruch 4 sind.
b. R₁ ist ein Oligo- oder Polyether-Rest aus der Gruppe mit Aryl-[O-Aryl]ₙ-, Aryl-[O-Aryl]ₙ-O-, Alkyl-[O-Aryl]ₙ- und Alkyl-[O-Aryl]ₙ-O- und weist eine der folgenden Formeln auf 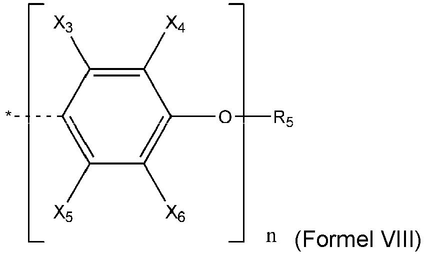 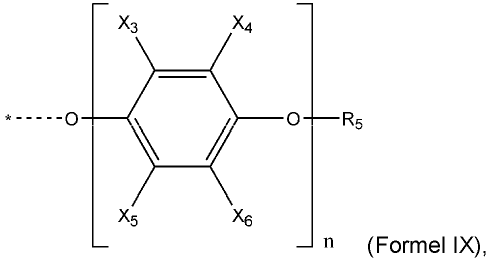 in denen n = 1 bis 800 und R₅ definiert ist wie in den Formeln IV und V und X₃ bis X₆ unabhängig voneinander H oder einer der Substituenten aus Anspruch 4 sind.

6. Magnesiumbatterie nach einem der vorhergehenden Ansprüche, wobei R₂ und R₃ unabhängig voneinander ein Fluor-, Chlor-, Brom- oder lod-Atom oder eine Cyano-, Carbonyl-, Hydroxy-, Carboxy-, Amido-, Amino-, Nitro-, Phosphonyl- oder Sulfonyl-Gruppe oder eine trihalogenierte Methyl-Gruppe (-CX₃ mit X = F, Cl, Br oder I) sind.

7. Magnesiumbatterie nach einem der vorhergehenden Ansprüche, wobei das Imidazolat-Anion die Formel X 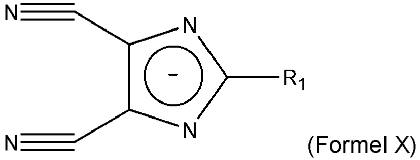 aufweist, in der R₁ definiert ist wie in Formel I.

8. Magnesiumbatterie nach einem der vorhergehenden Ansprüche, mit mindestens einem der folgenden Merkmale:
a. Das Lösungsmittel ist oder umfasst ein Amid, insbesondere Dimethylacetamid (DMA) und Dimethylformamid (DMF),
b. das Lösungsmittel ist oder umfasst ein Nitril, insbesondere Acetonitril und Adiponitril,
c. das Lösungsmittel ist oder umfasst ein organisches Carbonat, insbesondere Ethylcarbonat (EC), Diethylcarbonat (DEC), Dimethylcarbonat (DMC), Ethylmethylcarbonat (EMC) und Propylencarbonat (PC),
d. das Lösungsmittel ist oder umfasst einen Ether, insbesondere Dimethylether, Diethylether, Diisopropylether und Tetrahydrofuran,
e. Das Lösungsmittel ist eine Mischung aus mindestens zwei der in 8.a. bis 8.d. der genannten Lösungsmittel.

9. Magnesiumbatterie nach einem der vorhergehenden Ansprüche mit mindestens einem der folgenden Merkmale:
a. Das Elektrolytsystem umfasst als Lösungsmittel ein organisches Carbonat und/oder einen Ether und das Magnesiumsalz umfasst ein Imidazolat-Anion der Formel I, wobei der Rest R₁ in Formel I ein Rest gemäß einer der Formeln II bis IX ist, und wobei die Reste R₂ und R₃ in Formel I gemäß Anspruch 6 definiert sind.
b. Das Elektrolytsystem umfasst als Lösungsmittel ein Amid und/oder ein Nitril und das Magnesiumsalz umfasst ein Imidazolat-Anion der Formel I, wobei der Rest R₁ in Formel I eine Alkyl- oder Aryl-Gruppe gemäß Anspruch 2 ist, die gemäß Anspruch 4 substituiert ist, und wobei die Reste R₂ und R₃ in Formel I gemäß Anspruch 6 definiert sind.

10. Magnesiumbatterie nach einem der vorhergehenden Ansprüche mit mindestens einem der folgenden Merkmale:
a. die negative Elektrode umfasst als Aktivmaterial mindestens eine Kohlenstoffmodifikation, insbesondere aus der Gruppe mit amorpher Kohlenstoff, graphitierter Kohlenstoff, Graphen, Fulleren und Kohlenstoffnanoröhrchen,
b. die negative Elektrode umfasst als Aktivmaterial mindestens ein Metall, insbesondere aus der Gruppe mit Silizium, Germanium, Zinn, Zink, Antimon, Bismut, Aluminium und Mangan, oder eine Legierung mindestens eines dieser Metalle mit Magnesium,
c. die negative Elektrode umfasst als Aktivmaterial ein Komposit oder eine Mischung aus mindestens einem der in 10.b. genannten Metalle oder der in 10.b. genannten Legierung und der in 10.a. genannten mindestens einen Kohlenstoffmodifikation,

11. Magnesiumbatterie nach einem der vorhergehenden Ansprüche, wobei die negative Elektrode mindestens eine Komponente aus der Gruppe mit leitfähigkeitsverbesserndem Additiv, Elektrodenbinder, Korrosionsinhibitor und Stromableiter aufweist.

12. Elektrolytsystem, insbesondere für eine Magnesiumbatterie nach einem der Ansprüche 1 bis 11, umfassend ein Lösungsmittel und/oder eine ionische Flüssigkeit und ein darin zumindest teilweise gelöstes Magnesiumsalz mit einem Imidazolat-Anion der Formel I, wobei
- das Lösungsmittel ein Amid, insbesondere Dimethylacetamid (DMA) und Dimethylformamid (DMF), ist oder umfasst, oder
- das Lösungsmittel ein Nitril, insbesondere Acetonitril und Adiponitril, ist oder umfasst, oder
- das Lösungsmittel ein organisches Carbonat, insbesondere Ethylcarbonat (EC), Diethylcarbonat (DEC), Dimethylcarbonat (DMC), Ethylmethylcarbonat (EMC) und Propylencarbonat (PC), ist oder umfasst, oder
- das Lösungsmittel ein Ether ist oder einen Ether umfasst, insbesondere Dimethylether, Diethylether, Diisopropylether und Tetrahydrofuran, oder
- das Lösungsmittel eine Mischung aus mindestens zwei der vorgenannten Lösungsmittel ist
und wobei die Konzentration des gelösten Magnesiumsalzes in dem Lösungsmittel zwischen 0,1 und 3,5 mol/I beträgt.

13. Elektrolytsystem nach Anspruch 12, wobei die Konzentration des gelösten Magnesiumsalzes in dem Lösungsmittel zwischen 0,1 mol/I und 2,5 mol/l, besonders bevorzugt zwischen 0,1 mol/I und 2,0 mol/l, beträgt.

## Claims

1. Secondary magnesium battery having the following features:
a. it comprises at least one positive electrode which contains an active material which is able to incorporate and release magnesium ions reversibly,
b. it comprises at least one negative electrode which contains an active material which is able to incorporate and release magnesium ions reversibly,
c. it comprises an electrolyte system composed of a solvent and a magnesium salt which is at least partially dissolved in the solvent and via which a charge exchange between the at least one positive electrode and the at least one negative electrode can take place, where the concentration of the dissolved magnesium salt in the solvent is in the range from 0.1 to 3.5 mol/l, and
d. the magnesium salt has an imidazolate anion of the formula I 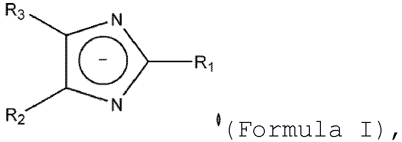 where R₁ is
- a radical from the group consisting of alkyl-, aryl-, alkylaryl-, arylalkyl-, alkyl-O-, aryl-O-, alkyl-O-alkyl-, aryl-O-aryl-, alkyl-O-aryl- and aryl-O-alkyl- where alkyl = -CH₂-, -CH₃, -(CH₂)₂-, -C₂H₅, -(CH₂)₃-, -C₃H₇, -(CH₂)₄-, -C₄H₉, -(CH₂)₅-, -C₅H₁₁, -(CH₂)₆-, -C₆H₁₃ or cycloalkyl- or
- an oligoether or polyether radical from the group consisting of alkyl-[O-alkyl]ₙ-, alkyl-[O-alkyl]ₙ-O-, aryl-[O-aryl]ₙ-, aryl-[O-aryl]ₙ-O-, alkyl-[O-aryl]ₙ-, alkyl-[O-aryl]ₙ-O-, aryl-[O-alkyl]ₙ- and aryl-[O-alkyl]ₙ-O- where n = 1 to 800 and alkyl = -CH₂-, -CH₃, -(CH₂)₂-, -C₂H₅, - (CH₂)₃-, -C₃H₇, - (CH₂)₄-, -C₄H₉, - (CH₂)₅-, -C₅H₁₁, - (CH₂)₆-, -C₆H₁₃ or cycloalkyl- or
- a substituted derivative of one of these radicals,
and R₂ and R₃ are each
- independently of one another electron acceptor substituents having a -I and/or -M effect which stabilise the negative charge of the imidazolate anion.

2. Magnesium battery according to Claim 1 having at least one of the following features:
- R₁ or at least one alkyl in R₁ is a C₅-C₆-cycloalkyl group,
- R₁ or at least one alkyl in R₁ is a cycloalkyl group in which one or 2 carbon atoms have been replaced by heteroatoms,
- R₁ is or comprises a C₅-C₂₀-aryl group, in particular a C₆-C₁₀-aryl group,
- R₁ is or comprises an aryl group in which one or 2 carbon atoms have been replaced by heteroatoms.

3. Magnesium battery according to Claim 1 or Claim 2 having the following features:
a. R₁ is an oligoether or polyether radical from the group consisting of alkyl-[O-alkyl]ₙ- and alkyl-[O-alkyl]ₙ-O-, aryl-[O-alkyl]ₙ- and aryl-[O-alkyl]ₙ-O- and has one of the following formulae 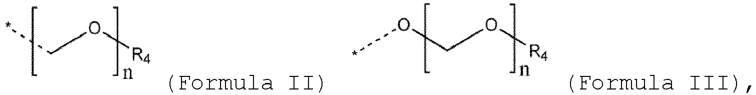 where n = 1 to 800 and R₄ is an alkyl group or an aryl group,
b. R₁ is an oligoether or polyether radical from the group consisting of aryl-[O-aryl]ₙ-, aryl-[O-aryl]ₙ-O-, alkyl-[O-aryl]ₙ- and alkyl-[O-aryl]ₙ-O- and has one of the following formulae 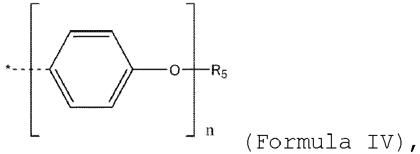 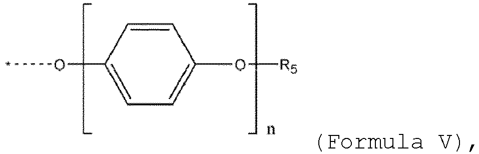 where n = 1 to 800 and R₅ is an alkyl group or an aryl group.

4. Magnesium battery according to any of the preceding claims, wherein at least one H atom in at least one of the alkyl or aryl groups in the formulae I-V has been replaced by a fluorine, chlorine, bromine or iodine atom or by a cyano, carbonyl, hydroxy, carboxy, amido, amino, nitro, phosphonyl or sulfonyl group.

5. Magnesium battery according to Claim 4 having one of the following features:
a. R₁ is an oligoether or polyether radical from the group consisting of alkyl-[O-alkyl]ₙ- and alkyl-[O-alkyl]ₙ-O-, aryl-[O-alkyl]ₙ- and aryl-[O-alkyl]ₙ-O- and has one of the following formulae 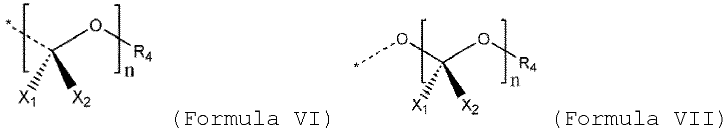 where n = 1 to 800 and R₄ is defined as in the formulae II and III and X₁ and X₂ are each, independently of one another, H or a substituent as set forth in Claim 4,
b. R₁ is an oligoether or polyether radical from the group consisting of aryl-[O-aryl]ₙ-, aryl-[O-aryl]ₙ-O-, alkyl-[O-aryl]ₙ- and alkyl-[O-aryl]ₙ-O- and has one of the following formulae 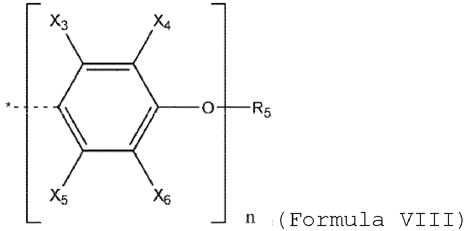 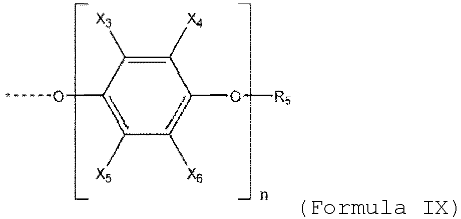 where n = 1 to 800 and R₅ is defined as in the formulae IV and V and X₃ to X₆ are each, independently of one another, H or a substituent as set forth in Claim 4.

6. Magnesium battery according to any of the preceding claims, wherein R₂ and R₃ are each, independently of one another, a fluorine, chlorine, bromine or iodine atom or a cyano, carbonyl, hydroxy, carboxy, amido, amino, nitro, phosphonyl or sulfonyl group or a trihalogenated methyl group (-CX₃ where X = F, Cl, Br or I).

7. Magnesium battery according to any of the preceding claims, wherein the imidazolate anion has the formula X 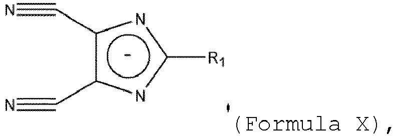 where R₁ is defined as in formula I.

8. Magnesium battery according to any of the preceding claims having at least one of the following features:
a. the solvent is or comprises an amide, in particular dimethylacetamide (DMA) and dimethylformamide (DMF),
b. the solvent is or comprises a nitrile, in particular acetonitrile and adiponitrile,
c. the solvent is or comprises an organic carbonate, in particular ethyl carbonate (EC), diethyl carbonate (DEC), dimethyl carbonate (DMC), ethyl methyl carbonate (EMC) and propylene carbonate (PC),
d. the solvent is or comprises an ether, in particular dimethyl ether, diethyl ether, diisopropyl ether and tetrahydrofuran,
e. the solvent is a mixture of at least two of the solvents specified in 8.a. to 8.d.

9. Magnesium battery according to any of the preceding claims having at least one of the following features:
a. the electrolyte system comprises an organic carbonate and/or an ether as solvent and the magnesium salt comprises an imidazolate anion of the formula I, where the radical R₁ in formula I is a radical having one of the formulae II to IX and the radicals R₂ and R₃ in formula I are defined as in Claim 6,
b. the electrolyte system comprises an amide and/or a nitrile as solvent and the magnesium salt comprises an imidazolate anion of the formula I, where the radical R₁ in formula I is an alkyl or aryl group as per Claim 2 which is substituted as per Claim 4 and the radicals R₂ and R₃ in formula I are defined as in Claim 6.

10. Magnesium battery according to any of the preceding claims having at least one of the following features:
a. the negative electrode comprises at least one carbon modification, in particular from the group consisting of amorphous carbon, graphitized carbon, graphene, fullerene and carbon nanotubes, as active material,
b. the negative electrode comprises at least one metal, in particular from the group consisting of silicon, germanium, tin, zinc, antimony, bismuth, aluminium and manganese or an alloy of at least one of these metals with magnesium as active material,
c. the negative electrode comprises a composite or a mixture of at least one of the metals specified in 10.b. or the alloy specified in 10.b. and the at least one carbon modification specified in 10.a. as active material.

11. Magnesium battery according to any of the preceding claims, wherein the negative electrode comprises at least one component from the group consisting of conductivity-improving additive, electrode binder, corrosion inhibitor and power outlet lead.

12. Electrolyte system, in particular for a magnesium battery according to any of Claims 1 to 11, comprising a solvent and/or an ionic liquid and a magnesium salt which is at least partially dissolved therein and has an imidazolate anion of the formula I, wherein
- the solvent is or comprises an amide, in particular dimethylacetamide (DMA) and dimethylformamide (DMF), or
- the solvent is or comprises a nitrile, in particular acetonitrile and adiponitrile, or
- the solvent is or comprises an organic carbonate, in particular ethyl carbonate (EC), diethyl carbonate (DEC), dimethyl carbonate (DMC), ethyl methyl carbonate (EMC) and propylene carbonate (PC), or
- the solvent is an ether or comprises an ether, in particular dimethyl ether, diethyl ether, diisopropyl ether and tetrahydrofuran, or
- the solvent is a mixture of at least two of the abovementioned solvents
and the concentration of the dissolved magnesium salt in the solvent is in the range from 0.1 to 3.5 mol/l.

13. Electrolyte system according to Claim 12, wherein the concentration of the dissolved magnesium salt in the solvent is in the range from 0.1 mol/l to 2.5 mol/l, particularly preferably from 0.1 mol/l to 2.0 mol/l.

## Revendications

1. Batterie secondaire au magnésium comportant les caractéristiques suivantes :
a. elle comprend au moins une électrode positive qui contient un matériau actif qui peut stocker et déstocker de manière réversible des ions magnésium,
b. elle comprend au moins une électrode négative qui contient un matériau actif qui peut stocker et déstocker de manière réversible des ions magnésium,
c. elle comprend un système d'électrolyte composé d'un solvant et d'un sel de magnésium, qui est au moins partiellement dissous dans le solvant, par l'intermédiaire duquel un échange de charge entre l'au moins une électrode positive et l'au moins une électrode négative peut avoir lieu, la concentration du sel de magnésium dissous dans le solvant étant comprise entre 0,1 et 3,5 moles/l, et
d. le sel de magnésium présente un anion imidazolate de formule I 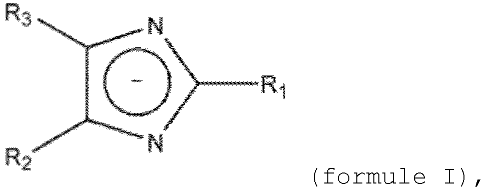 dans laquelle R₁ est
- un radical du groupe comportant alkyle-, aryle-, alkyl-aryle-, aryl-alkyle-, alkyl-O-, aryl-O-, alkyl-O-alkyle-, aryl-O-aryle-, alkyl-O-aryle- et aryl-O-alkyle- avec alkyle = -CH₂-, -CH₃, - (CH₂)₂-, -C₂H₅, -(CH₂)₃-, -C₃H₇, -(CH₂)₄-, -C₄H₉, -(CH₂)₅-, -C₅H₁₁ -(CH₂)₆-, -C₆H_{1 3} ou cycloalkyle- ou
- un radical oligoéther ou polyéther du groupe comportant alkyl-[O-alkyle]ₙ-, alkyl-[O-alkyle]ₙ-O-, aryl-[O-aryle]ₙ-, aryl-[O-aryle]ₙ-O-, alkyl-[O-aryle]ₙ-, alkyle-[O-aryle]ₙ-O-, aryl-[O-alkyle]ₙ- et aryl-[O-alkyl]ₙ-O- avec n = 1 à 800 et alkyle = -CH₂-, -CH₃, - (CH₂)₂-, -C₂H₅, -(CH₂)₃-, -C₃H₇, -(CH₂)₄-, -C₄H₉, -(CH₂)₅-, -C₅H₁₁ -(CH₂)₆-, -C₆H₁ 3 ou cycloalkyle- ou
- un dérivé substitué d'un de ces radicaux,
et R₂ et R₃
- sont, indépendamment l'un de l'autre, des substituants accepteurs d'électrons avec un effet -I et/ou -M, qui stabilisent la charge négative de l'anion imidazolate.

2. Batterie au magnésium selon la revendication 1, comportant au moins l'une des caractéristiques suivantes :
- R₁ ou au moins un alkyle dans R₁ est un groupe C₅₋₆-alkyle,
- R₁ ou au moins un alkyle dans R₁ est un groupe cycloalkyle, dans lequel un ou 2 atomes de carbone sont remplacés par des hétéroatomes,
- R₁ est ou comprend un groupe C₅₋₂₀-aryle, en particulier un groupe C₆₋₁₀-aryle,
- R₁ est ou comprend un groupe aryle dans lequel un ou 2 atomes de carbone sont remplacés par des hétéroatomes.

3. Batterie au magnésium selon la revendication 1 ou 2, comportant l'une des caractéristiques suivantes :
a. R₁ est un radical oligoéther ou polyéther du groupe comportant alkyl-[O-alkyle]ₙ- et alkyl-[O-alkyle]ₙ-O-, aryl-[O-alkyle]ₙ- et aryl-[O-alkyl]ₙ-O- et présente l'une des formules suivantes 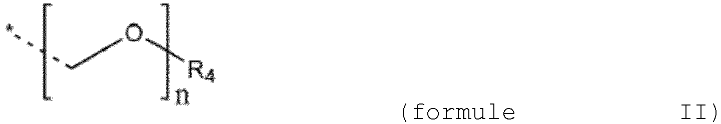 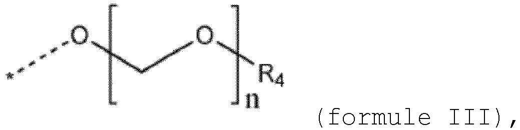 dans lesquelles n = 1 à 800 et R₄ est un groupe alkyle ou aryle,
b. R₁ est un radical oligoéther ou polyéther du groupe comportant aryl-[O-aryle]ₙ-, aryl-[O-aryle]ₙ-O-, alkyl-[O-aryle]ₙ- et alkyle-[O-aryle]ₙ-O- et présente l'une des formules suivantes 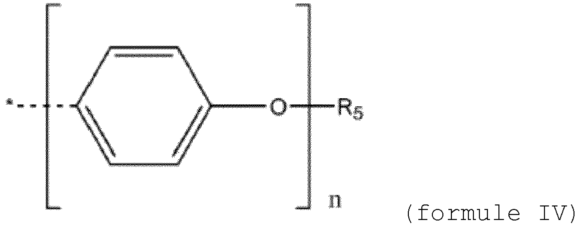 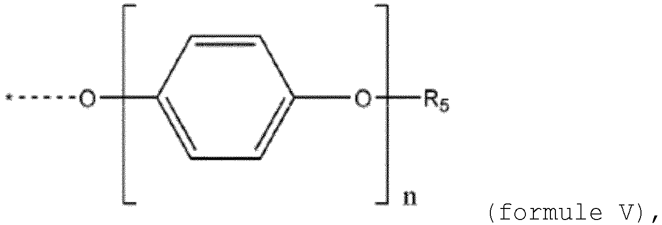 dans lesquelles n = 1 à 800 et R₅ est un groupe alkyle ou aryle.

4. Batterie au magnésium selon l'une quelconque des revendications précédentes, dans laquelle pour au moins l'un des groupes alkyle ou aryle dans les formules I à V au moins un atome de H est remplacé par un atome de fluor, de chlore, de brome ou d'iode ou par un groupe cyano, carbonyle, hydroxy, carboxy, amido, amino, nitro, phosphonyle ou sulfonyle.

5. Batterie au magnésium selon la revendication 4, comportant l'une des caractéristiques suivantes :
a. R₁ est un radical oligoéther ou polyéther du groupe comportant alkyl-[O-alkyle]ₙ- et alkyl-[O-alkyle]ₙ-O-, aryl-[O-alkyle]ₙ- et aryl-[O-alkyl]ₙ-O- et présente l'une des formules suivantes 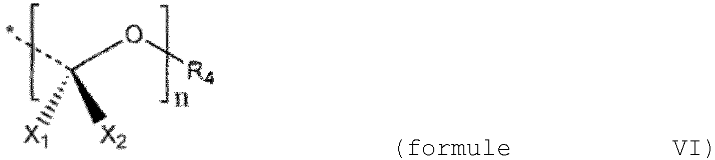 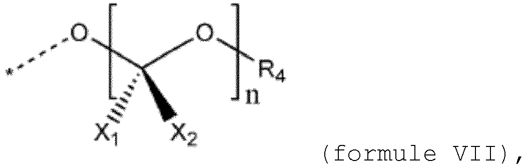 dans lesquelles n = 1 à 800 et R₄ est défini comme dans les formules II et III et X₁ et X₂ sont, indépendamment l'un de l'autre, H ou l'un des substituants de la revendication 4,
b. R₁ est un radical oligoéther ou polyéther du groupe comportant aryl-[O-aryle]ₙ-, aryl-[O-aryle]ₙ-O-, alkyl-[O-aryle]ₙ- et alkyle-[O-aryle]ₙ-O- et présente l'une des formules suivantes 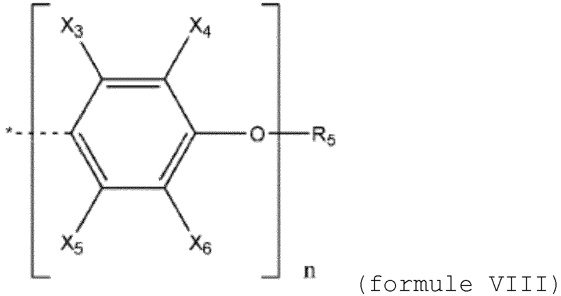 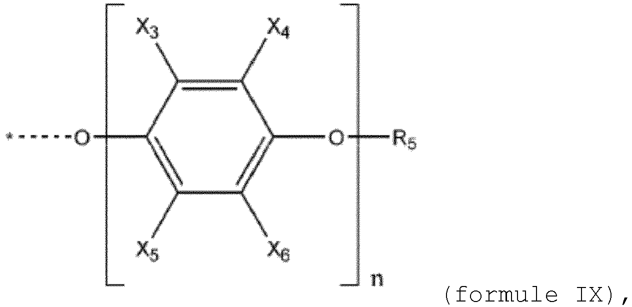 dans lesquelles n = 1 à 800 et R₅ est défini comme dans les formules IV et V et X₃ à X₆ sont, indépendamment les uns des autres, H ou l'un des substituants de la revendication 4.

6. Batterie au magnésium selon l'une quelconque des revendications précédentes, R₂ et R₃ étant indépendamment l'un de l'autre un atome de fluor, de chlore, de brome ou d'iode ou un groupe cyano, carbonyle, hydroxy, carboxy, amido, amino, nitro, phosphonyle ou sulfonyle ou un groupe méthyle trihalogéné (-CX₃ avec X = F, Cl, Br ou I).

7. Batterie au magnésium selon l'une quelconque des revendications précédentes, l'anion imidazolate présentant la formule X 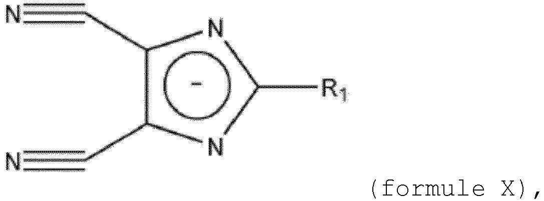 dans laquelle R₁ est défini comme dans la formule I.

8. Batterie au magnésium selon l'une quelconque des revendications précédentes, comportant au moins l'une des caractéristiques suivantes :
a. le solvant est ou comprend un amide, en particulier le diméthylacétamide (DMA) et le diméthylformamide (DMF),
b. le solvant est ou comprend un nitrile, en particulier l'acétonitrile et l'adiponitrile,
c. le solvant est ou comprend un carbonate organique, en particulier le carbonate d'éthyle (EC), le carbonate de diéthyle (DEC), le carbonate de diméthyle (DMC), le carbonate d'éthyle et de méthyle (EMC) et le carbonate de propylène (PC),
d. le solvant est ou comprend un éther, en particulier le diméthyléther, le diéthyléther, le diisopropyléther et le tétrahydrofuranne,
e. le solvant est un mélange d'au moins deux des solvants mentionnés en 8.a à 8.d.

9. Batterie au magnésium selon l'une quelconque des revendications précédentes, comportant au moins l'une des caractéristiques suivantes :
a. le système d'électrolyte comprend en tant que solvant un carbonate organique et/ou un éther et le sel de magnésium comprend un anion imidazolate de formule I, le radical R₁ dans la formule I étant un radical selon l'une des formules II à IX, et les radicaux R₂ et R₃ dans la formule I étant définis selon la revendication 6,
b. le système d'électrolyte comprend en tant que solvant un amide et/ou un nitrile et le sel de magnésium comprend un anion imidazolate de formule I, le radical R₁ dans la formule I étant un groupe alkyle ou aryle selon la revendication 2, qui est substitué selon la revendication 4, et les radicaux R₂ et R₃ dans la formule I étant définis selon la revendication 6.

10. Batterie au magnésium selon l'une quelconque des revendications précédentes, comportant au moins l'une des caractéristiques suivantes :
a. l'électrode négative comprend en tant que matériau actif au moins une modification du carbone, en particulier du groupe comportant du carbone amorphe, du carbone graphitique, du graphène, un fluorène et des nanotubes de carbone,
b. l'électrode négative comprend en tant que matériau actif au moins un métal, en particulier du groupe comportant le silicium, le germanium, l'étain, le zinc, l'antimoine, le bismuth, l'aluminium et le manganèse, ou un alliage d'au moins un de ces métaux avec le magnésium,
c. l'électrode négative comprend en tant que matériau actif un composite ou un mélange d'au moins l'un des métaux mentionnés en 10.b. ou de l'alliage mentionné en 10.b. et de l'au moins une modification du carbone mentionnée en 10.a..

11. Batterie au magnésium selon l'une quelconque des revendications précédentes, l'électrode négative présentant au moins un composant du groupe comportant un additif améliorant la conductivité, un liant d'électrode, un inhibiteur de corrosion et un dérivateur de courant.

12. Système d'électrolyte, en particulier pour une batterie au magnésium selon l'une quelconque des revendications 1 à 11, comprenant un solvant et/ou un liquide ionique et un sel de magnésium au moins partiellement dissous dans celui-ci comportant un anion imidazolate de formule I,
- le solvant étant ou comprenant un amide, en particulier le diméthylacétamide (DMA) et le diméthylformamide (DMF), ou
- le solvant étant ou comprenant un nitrile, en particulier l'acétonitrile et l'adiponitrile, ou
- le solvant étant ou comprenant un carbonate organique, en particulier le carbonate d'éthyle (EC), le carbonate de diéthyle (DEC), le carbonate de diméthyle (DMC), le carbonate d'éthyle et de méthyle (EMC) et le carbonate de propylène (PC), ou
- le solvant étant ou comprenant un éther, en particulier le diméthyléther, le diéthyléther, le diisopropyléther et le tétrahydrofuranne, ou
- le solvant étant un mélange d'au moins deux des solvants mentionnés précédemment
et la concentration du sel de magnésium dissous dans le solvant étant comprise entre 0,1 et 3,5 moles/l.

13. Système d'électrolyte selon la revendication 12, la concentration du sel de magnésium dissous dans le solvant étant comprise entre 0,1 et 2,5 moles/l, particulièrement préférablement entre 0,1 et 2,0 moles/l.
